Europäisches Patentamt

European Patent Office

Office européen des brevets

(19)

(11) Numéro de publication : **0 423 039 B1**

(12) ## FASCICULE DE BREVET EUROPEEN

(45) Date de publication du fascicule du brevet :
**22.12.93 Bulletin 93/51**

(51) Int. Cl.$^5$ : **B09B 3/00**

(21) Numéro de dépôt : **90402858.6**

(22) Date de dépôt : **12.10.90**

(54) Procédé et dispositifs de décontamination de produits solides.

(30) Priorité : **12.10.89 FR 8913364**

(43) Date de publication de la demande :
**17.04.91 Bulletin 91/16**

(45) Mention de la délivrance du brevet :
**22.12.93 Bulletin 93/51**

(84) Etats contractants désignés :
**AT BE CH DE DK ES FR GB GR IT LI LU NL SE**

(56) Documents cités :
**EP-A- 0 324 566
EP-A- 0 334 570
DE-A- 3 706 684
DE-A- 3 738 704
US-A- 4 715 965
PATENT ABSTRACTS OF JAPAN, vol. 11, no. 124 (C-416)[2571], 17 avril 1987; & JP-A-61 263 687 (MINORU IKE) 21-11-1986**

(73) Titulaire : **EMC SERVICES
62, rue Jeanne d'Arc
F-75013 Paris (FR)**

(72) Inventeur : **Fraysse, Guy
167, rue du Tiret
F-01500 Ambérieu en Bugey (FR)**
Inventeur : **Thauront, Jacques
84, rue La Bruyère
F-95120 Ermont (FR)**

(74) Mandataire : **Gutmann, Ernest et al
Ernest Gutmann - Yves Plasseraud S.A., 67, boulevard Haussmann
F-75008 Paris (FR)**

## Description

La présente invention concerne un procédé et des dispositifs de décontamination de produits solides pollués par un ou plusieurs contaminants vaporisables par chauffage sous vide.

Elle trouve une application particulièrement importante dans le domaine de la décontamination de produits pollués par des contaminants, soit directement dangereux pour l'environnement, comme par exemple le mercure, soit indirectement dangereux car susceptibles de se dégrader en sous produits eux-mêmes directement dangereux pour l'environnement.

A cette dernière catégorie de contaminants se rattachent des hydrocarbures halogénés, par exemple des Polychlorobiphényles (PCB) dont les produits de dégradation thermique par oxydation sont particulièrement dangereux.

L'invention est notamment applicable à la décontamination de terres ou matériaux contaminées au mercure.

Elle s'applique également avantageusement à la décontamination et à la récupération ou régénération de terres contaminées par du PCB, des solvants ou des hydrocarbures, à la décontamination et à la récupération de transformateurs ayant contenu du PCB également connu sous la dénomination de "pyralène" comme fluide diélectrique, ou encore de rouleaux de feuilles d'aluminium utilisés comme corps de condensateurs ayant comporté un tel fluide diélectrique.

On sait que le PCB peut donner naissance dans certaines conditions de température et en présence d'oxygène, à des benzo-paradioxines chlorées ou "dioxines" dont certaines sont d'une très grande toxicité. Il s'agit notamment du Tetrachloro-2,3,7,8- dibenzopraradioxine (TCDD). (Dioxine de SEVEZO). La décontamination efficace de produits contaminés au PCB est donc à rechercher.

Par ailleurs, la présence d'une grande quantité de tels produits pollués rend intéressante leur récupération ou régénération quand elle est possible.

On sait qu'il existe essentiellement trois types de traitement d'un produit solide contaminé par une certaine proportion de contaminant.

Le produit pollué peut être mis au rebut dans des décharges surveillées, il peut être incinéré ou enfin il peut être décontaminé.

La mise au rebut est une solution encombrante et peu satisfaisante.

La destruction par combustion doit en général s'effectuer à très haute température et n'est pas applicable à n'importe quel produit. C'est un procédé coûteux, surtout lorsque le produit contaminé n'a pas un pouvoir calorifique élevé et nécessite de ce fait un apport de combustible à haut pouvoir calorifique.

Enfin, les solutions connues de décontamination sont en général coûteuses et complexes à mettre en oeuvre.

On connaît, par exemple, les procédés de décontamination d'un transformateur ayant contenu du "pyralène", par lavage des pièces contaminées avec un solvant. Une telle solution ne convient pas, par exemple, à la décontamination de solides friables et engendre des volumes importants d'effluents liquides.

On connaît également des procédés de décontamination, par exemple de terre polluée, par chauffage et évaporation du contaminant dans un four, avec gaz chauffant de balayage (DE-A-3 706 684), ou dans un four rotatif où la terre est malaxée pour permettre un chauffage plus homogène (EP-A-0 324 566). Cette solution ne convient pas à la décontamination d'éléments encombrants non broyés.

On connaît aussi (DE-A-3 738 704) un dispositif de décontamination par mise sous vide d'un matériau à décontaminer, le contaminant vaporisé étant ensuite condensé directement par refroidissement.

Un tel dispositif ne permet pas toujours une décontamination suffisante.

La présente invention vise à fournir un procédé et des dispositifs de décontamination de produits pollués par un ou plusieurs contaminants vaporisables par chauffage sous vide, répondant mieux que ceux antérieurement connus aux exigences de la pratique, notamment en ce qu'ils permettent la décontamination de tous types de produits, friables ou non friables en morceaux obtenus par concassage ou en bloc solide non concassé ou broyé, contaminés par de faibles ou de fortes proportions d'un ou plusieurs contaminants et ce de façon peu coûteuse et avec d'excellents résultats de décontamination, meilleurs que ceux obtenus industriellement avec les procédés connus.

Il va donc être possible de récupérer, voire même de recycler tels quels, les produits contaminés qui ont été traités selon la présente invention.

On peut, par exemple, récupérer les métaux d'un transformateur contaminé au pyralène, voire même recycler le transformateur après remontage.

Dans le cas de rouleaux de feuilles d'aluminium comprenant des papiers contaminés en pyralène, le procédé de l'invention présente l'avantage de permettre la séparation aisée entre l'aluminium et le papier.

Pour répondre à ces buts, l'invention propose notamment un procédé de décontamination d'un produit so-

EP 0 423 039 B1

lide pollué par au moins un contaminant vaporisable par chauffage sous vide, selon la revendication 1.

Dans ce procédé :

- on introduit le produit dans une enceinte de chauffage et de mise sous vide,
- on chauffe sensiblement dans la masse ledit produit dans une plage de température déterminée, en réalisant dans ladite enceinte un vide inférieur à de l'ordre de 0,5 bar absolu et suffisant pour abaisser la pression de ladite enceinte au-dessous du seuil de vaporisation (voire, dans le cas de certains contaminants, de sublimation) du contaminant dans ladite plage de températures,
- on maintient lesdites conditions de températures et de pressions dans l'enceinte pendant un temps suffisant pour vaporiser (ou sublimer) sensiblement la totalité du contaminant contenu dans ledit produit,
- on extrait le contaminant vaporisé par aspiration de l'atmosphère de l'enceinte et,
- on condense ledit contaminant aspiré.

De façon inattendue, le procédé de l'invention permet une excellente désorption du contaminant extrait du produit pollué, malgré une contamination initiale qui peut être très faible (quelques ppm de contaminant seulement).

Dans des modes avantageux de réalisation, on a de plus recours à l'une et/ou à l'autre des dispositions suivantes :

- le procédé est un procédé industriel discontinu ;
- le vide réalisé est inférieur à 0,3 bar absolu ;
- le vide réalisé est inférieur à 0,1 bar absolu ;
- le vide réalisé est inférieur à 0,05 bar absolu ;
- le vide réalisé est compris entre 0,5 bas absolu et 0,01 bar absolu et avantageusement sensiblement égal à 0,1 bar absolu ;
- le produit étant friable, en fragments, ou préalablement concassé ou broyé, on chauffe le produit par malaxage dudit produit dans un four rotatif ;
- on extrait la vapeur d'eau initialement contenue dans le produit et formée lors du chauffage dudit produit au travers d'un premier circuit, en condensant ladite vapeur d'eau dans un condenseur/dépoussieur jusqu'à élimination de ladite vapeur d'eau, puis on réalise le vide dans l'enceinte dans les conditions susindiquées, et on extrait le contaminant vaporisé en aspirant l'atmosphère déshydratée de ladite enceinte au travers d'un second circuit, isolé dudit premier circuit ;
- le produit étant non friable, on chauffe ledit produit par circulation d'un gaz de chauffage dans l'enceinte ;
- le contaminant vaporisable étant un contaminant dont la dégradation thermique est dangereuse pour l'environnement, la plage de température déterminée est réglée de façon à éviter toute surchauffe de l'enceinte (localement ou non) à une température supérieure ou égale au seuil de dégradation thermique possible dudit contaminant ;
- le contaminant vaporisable étant du PCB, on chauffe le produit dans une plage de températures comprise entre de l'ordre de 200°C et de l'ordre de 490°C, et avantageusement entre 270°C et 330°C, en maintenant l'enceinte et le produit contaminé à des températures toujours strictement inférieures à 500°C ;
- dans le cas d'un produit du type friable, en fragments, ou préalablement concassé, pollué en contaminant dont les sous-produits de dégradation thermique par oxydation sont dangereux pour l'environnement, ce qui est notamment le cas du PCB, la réalisation du vide de fonctionnement s'effectue de préférence avant la montée en température (après vaporisation de l'eau), ce qui permet d'éliminer la plus grande partie de l'oxygène présent dans l'enceinte ;
- dans le cas d'un produit non friable du type ci-dessus, le chauffage par circulation d'un gaz s'effectue avantageusement avec un gaz neutre, comme de l'azote, après évacuation de l'air de l'enceinte ;
- le contaminant vaporisable étant notamment du mercure, la plage de températures déterminée est réglée de façon à limiter la température du contaminant vaporisé extrait en dessous d'une valeur seuil (800°C maximum, par exemple) ;
- on maintient les conditions de températures et de pressions pendant une durée comprise entre de l'ordre de 5 heures et de l'ordre de 36 heures et avantageusement de l'ordre de 8 heures ;
- le contaminant vaporisable étant du mercure, on chauffe le produit dans une plage de températures comprise entre de l'ordre de 200°C et de l'ordre de 500°C, et avantageusement de l'ordre de 400°C;
- on réalise un vide dans l'enceinte compris entre de l'ordre de 0,5 bar absolu et de l'ordre de 0,01 bar absolu, par exemple de 0,008 bar absolu ;
- on réalise, de plus, au moins un balayage de l'intérieur de l'enceinte par un gaz neutre, avantageusement de l'azote, lors de l'extraction du contaminant vaporisé, pour entraîner les traces résiduelles de contaminant vaporisé stagnant éventuellement dans ladite enceinte.

L'invention propose également un dispositif de décontamination d'un produit solide pollué par au moins un contaminant vaporisable par chauffage sous vide, selon la revendication 15 et les revendications 16 à 20.

3

L'invention sera mieux comprise à la lecture de la description qui suit de modes particuliers de réalisation, donnés à titre d'exemples non limitatifs.

La description se réfère aux dessins qui l'accompagnent, dans lesquels :

- la figure 1 est un schéma de principe d'un mode de réalisation du dispositif selon l'invention, mettant en oeuvre le procédé selon l'invention appliqué à la décontamination de produits solides friables ou en fragments.
- La figure 2 est un schéma de principe d'un autre mode de réalisation du dispositif selon l'invention appliqué à la décontamination de produits solides friables.
- La figure 3 montre schématiquement un condensateur filtrant la vapeur d'eau par "barbotage" selon un mode de réalisation d'un dispositif de l'invention.
- Les figures 4 et 5 montrent schématiquement des modes de réalisation du joint "tournant" entre four rotatif et moyens d'extraction et de condensation d'un dispositif selon l'invention.
- La figure 6 est un schéma de principe d'un mode de réalisation du dispositif selon l'invention, mettant en oeuvre le procédé selon l'invention, appliqué à la décontamination d'un produit solide non friable.
- La figure 7 est une vue de côté en élévation de l'enceinte de chauffage de la figure 6.
- La figure 8 est une coupe selon la ligne VIII-VIII de la figure 7.
- La figure 9 est un schéma de principe d'un mode de déchargement du four rotatif de la figure 2.

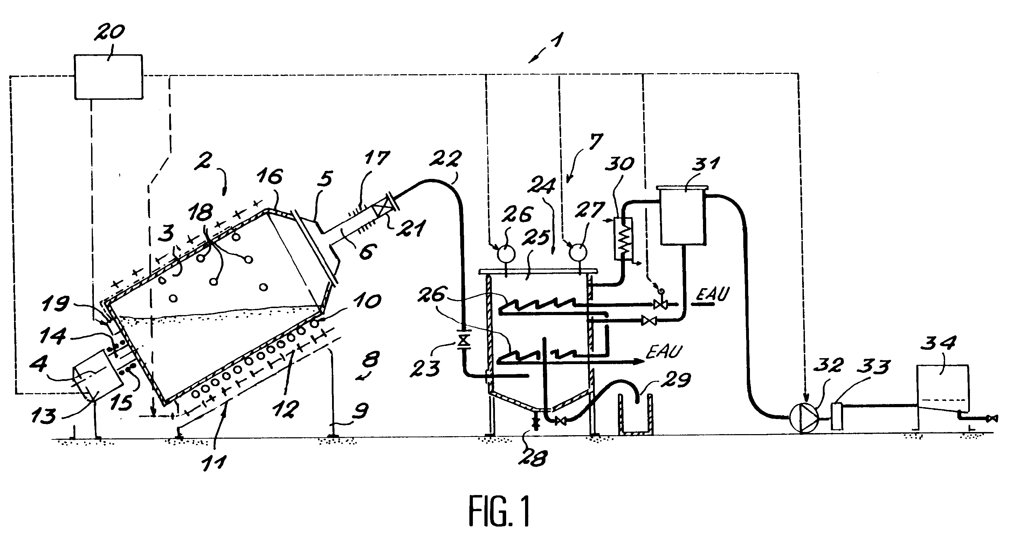

La figure 1 montre schématiquement un dispositif 1 selon un mode de réalisation de l'invention appliquée à la décontamination d'un matériau friable, ou préalablement concassé, par exemple un produit constitué par de la terre contaminée par du mercure.

Le dispositif 1 comporte un four tournant 2 comprenant une cuve ou enceinte 3 cylindrique autour d'un axe 4 qui peut être ou non incliné par rapport à l'horizontal, il peut être par exemple d'un angle de l'ordre de 30°.

Le caractère friable ou "fragmentaire" du ou des matériaux à décontaminer autorise l'utilisation d'un four tournant permettant une bonne homogénéisation du chauffage dans la masse du produit à décontaminer.

L'enceinte comporte un couvercle 5 amovible muni d'une manchette ou tuyauterie 6 d'évacuation des gaz, vers un circuit 7 de traitement des gaz. L'enceinte 3 cylindrique repose sur les branches latérales 9 d'un berceau 8 de support de l'enceinte par exemple par l'intermédiaire de roulements 10.

Des moyens 11 de chauffage extérieur par conduction de l'enceinte 3 sont prévus. Ils sont par exemple constitués par une ou plusieurs résistances 12 électrique de chauffage. D'autres moyens de chauffage, par induction par exemple, peuvent bien évidemment être utilisés.

Un moteur 13 d'entraînement en rotation de l'enceinte 3 autour de son axe 4 par l'intermédiaire d'un arbre 14 est prévu.

La figure 1 montre schématiquement des moyens 15 de butée et de maintien en position de l'enceinte 3 sur son berceau. Ces moyens de butées sont de conception à la portée de l'homme du métier et permettent la libre rotation de l'enceinte autour de son axe 4.

Le couvercle 5 et la partie supérieure 16 de l'enceinte sont calorifugés, à l'inverse de la manchette 6 qui a le rôle de refroidisseur et comprend avantageusement des ailettes 17.

L'enceinte 3 est munie de capteurs de température 18 régulièrement répartis, constitués par exemple par des thermocouples.

Ces thermocouples sont raccordés à un thermostat 19 muni d'un seuil d'alarme de température haute, par exemple fixé à 800°C. Le thermostat 19 est isolé thermiquement de la paroi de l'enceinte à laquelle il est fixé et est connecté à un automate 20 propre à commander le chauffage de l'enceinte 3 et qui permet de contrôler et de maintenir la température en tous points de l'enceinte, ainsi que pour le contaminant vaporisé extrait, toujours strictement inférieure à la valeur seuil d'alarme de température haute mentionnée ci-dessus, de façon connue en soi.

Le circuit 7 de traitement des gaz est raccordé à la manchette 6 par l'intermédiaire d'un joint tournant 21 de type connu en lui-même, par exemple un joint tournant fabriqué par la Société EMCO WHEATON aux ETATS-UNIS.

Le circuit 7 comprend un flexible 22 connecté d'un côté de façon amovible au joint tournant 18, et de l'autre côté via une vanne de barrage 23 à un laveur-refroidisseur-condenseur 24.

Ledit condenseur 24 comprend une cuve 25 munie de serpentins de refroidissement 26 alimentés en eau de refroidissement. Des moyens de contrôle et de commande de la pression dans le condenseur 24 et donc dans l'enceinte 3, et de la température du condenseur, sont prévus et connectés à l'automate 20.

Le condenseur 24 comporte un circuit 28 de vidange de la vapeur condensée formée par le chauffage du produit à décontaminer, et un circuit 29 de récupération du contaminant vaporisé recondensé par le condensateur 24.

Le circuit 7 de traitement des gaz comprend de plus un second refroidisseur condenseur 30, de sécurité, connecté sur l'extraction des gaz en aval du premier condenseur 24. Il est lui-même raccordé à un dévésiculeur 31 connecté à l'aspiration de la pompe à vide 32 qui réalise l'extraction du polluant vaporisé dans l'enceinte 3 via le circuit 7.

La pompe à vide 32 est une pompe de type connu propre à réaliser un vide industriel acceptable, par exemple jusqu'à 0,01 bar absolu, dans l'enceinte 3. Un filtre de sortie 33, et un filtre absolu par exemple à charbon actif 34.

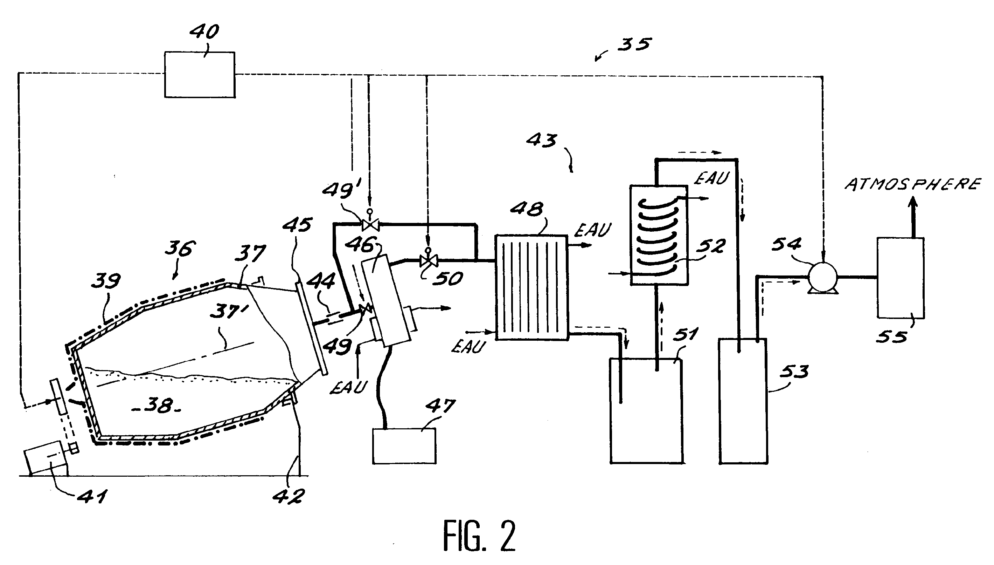

La figure 2 montre schématiquement un second mode de réalisation d'un dispositif 35 de décontamination de produit friable, ou en fragments soit initialement, soit après concassage, selon l'invention par exemple applicable à la décontamination d'une terre polluée par du PCB.

Le dispositif 35 comprend un four rotatif 36 comportant une enceinte 37 de rétention du produit friable 38 à décontaminer.

L'enceinte 37 comporte une double enveloppe ou coquille 39 de chauffage du produit à décontaminer, constituée par un réseau de résistances électriques de chauffage dont la puissance calorifique est contrôlée par des moyens 40 de commande connus en soi comme, par exemple, un automate programmable. Les résistances de chauffage sont agencées pour chauffer l'enceinte 37 dans une plage de températures déterminée par exemple entre de l'ordre de 200° C et 490° C, sans que "structurellement" la température des résistances et donc de l'ensemble et de son contenu ne puisse dépasser 500° C. Pour ce faire, il est par exemple prévu des moyens limiteurs de la puissance électrique fournie aux résistances, et donc de la puissance calorifique que lesdites résistances peuvent délivrer. Ces moyens, connus en soi, comprennent un rhéostat de réglage et des moyens sectionneurs de l'alimentation en courant au-delà d'une valeur seuil.

L'enceinte 37 est allongée autour d'un axe 37'. Un moteur 41 est prévu. Il est propre à entraîner l'enceinte à des vitesses de rotations choisies notamment en fonction de la quantité de produit à malaxer et à chauffer.

L'enceinte 37 est supportée par un berceau 42.

Le dispositif 35 comprend un circuit 43 de traitement des gaz relié à l'enceinte 37 par l'intermédiaire d'un joint tournant 44 de type connu. Le joint tournant est raccordé d'un côté au couvercle 45 de l'enceinte 37, et de l'autre côté à un filtre à poussières 46 refroidi à l'eau pour permettre la condensation de la vapeur d'eau formée dans un premier temps par le chauffage du produit. Le filtre à poussières peut être rincé périodiquement pour décolmatage.

Les boues obtenues dans le filtre 46 (eau + poussière) s'écoulent dans un bidon 47 de récupération des boues non contaminées ou peu contaminées en polluant.

Le circuit 43 comprend un second condenseur 48, que l'on peut par exemple isoler par un jeu de vannes 49, 49', 50 du premier condenseur 46. Le condenseur 48 est alors raccordé en direct à la sortie du four tournant, le filtre condenseur 46 étant by-passé, afin d'éviter sa contamination ultérieure par le polluant vaporisé.

Les condensats de polluants vaporisés sont récoltés dans un réservoir 51. Un dernier condenseur 52 est avantageusement prévu raccordé en aval du second condenseur 48; un bidon 53 permet la récupération de condensats issus dudit condenseur 52.

Une pompe à vide 54, raccordée au condenseur 52 assure le vide dans le circuit 43.

La pompe à vide est commandée par l'automate 40 et refoule à l'atmosphère via un filtre 55 par exemple à charbon actif.

Enfin, des moyens de balayage de l'enceinte par de l'azote (non représentés) sont avantageusement prévus pour "chasser" toutes traces rémanentes de contaminant vaporisé.

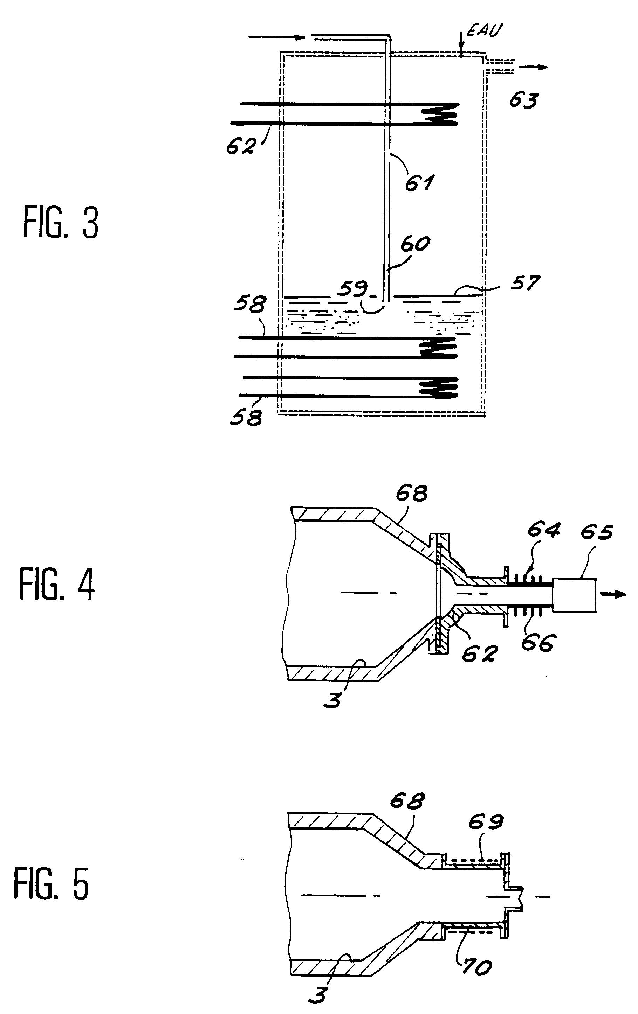

La figure 3 montre un condenseur/dépoussiéreur du type utilisable à la place du filtre condenseur 46 de la figure 2.

Il comprend un bidon 56 dans lequel on maintient un niveau constant 57 de liquide (eau + poussière) refroidi par des serpentins 58.

L'arrivée 59 de vapeur en pression provenant du four se fait par une tuyauterie 60 débouchant sous le niveau 57 du liquide, la condensation et le filtrage de la vapeur chargée de poussières étant ainsi réalisés par barbotage dans le liquide. Un trou casse vide 61 est prévu sur la tuyauterie 60. Un condenseur 62 de sécurité par exemple constitué par un serpentin de refroidissement, est installé en partie haute du bidon 56 sur le trajet de la tuyauterie 61 par exemple au-dessus du trou casse-vide 61.

Le bidon 56 est raccordé, en partie haute, au circuit de mise au vide par une tuyauterie 63.

Sur les figures 4 et 5, on a représenté shématiquement deux modes de réalisation de la partie du dispositif située au niveau du joint tournant, donnés à titre d'exemples non limitatifs.

En fin de décontamination, la température du four est importante (supérieure par exemple à 250° C). Or, le joint tournant monté à la sortie du four et qui permet la liaison étanche entre l'enceinte, qui tourne, et le circuit d'extraction et de condensation, qui est fixe, ne supporte pas de telles températures.

Il est donc nécessaire de refroidir la tuyauterie de raccordement avant le joint. Sur la figure 4, la tuyauterie 64 est refroidie avant le joint 65 par des ailettes 66 disposées à une distance suffisante du four pour éviter une condensation du PCB à la sortie immédiate dudit four (le couvercle 67 étant recouvert de calorifuge 68).

Il reste, en effet, toujours une partie de la terre contenue dans l'enceinte collée contre cette sortie, lors du malaxage, qu'il faut éviter de contaminer par les gaz sortants qui seraient immédiatement recondensés.

La figure 5 montre schématiquement un autre moyen de protection du joint tournant 69 par l'intermédiaire d'une virole cylindrique 70, déflectrice et interne au joint.

Le déflecteur étant chaud côté gaz évite la condensation du PCB tout en isolant le joint tournant 69 non calorifugé, qui est refroidi par sa surface d'échange avec l'atmosphère.

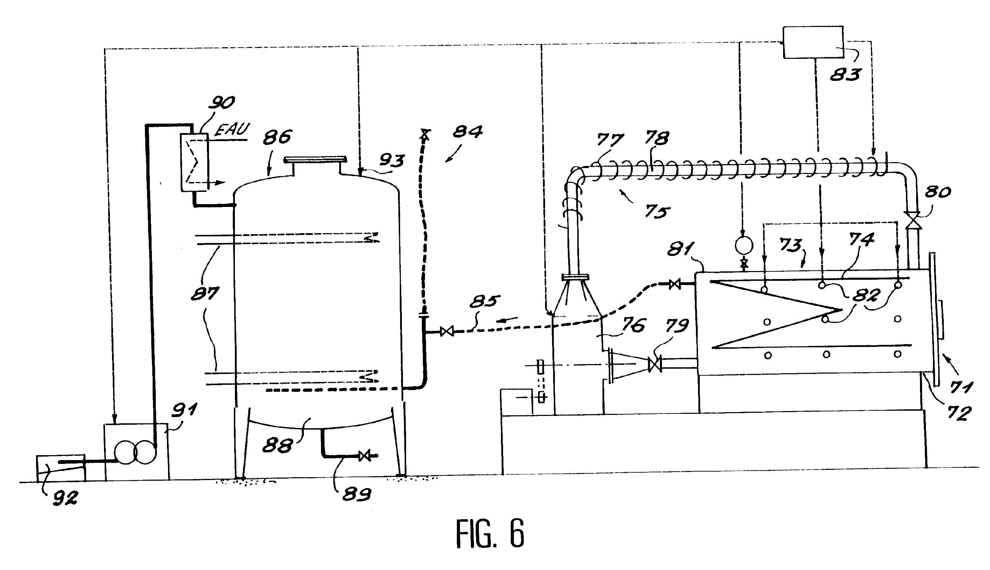

La figure 6 montre schématiquement un dispositif selon l'invention appliqué à la décontamination de produits solides non friables et non préalablement concassés, et/ou d'une taille trop importante pour être décontaminés dans un four tournant, comme par exemple un transformateur contaminé au "pyralène".

Le dispositif comprend un four 71 comportant une enceinte 72, fixe, propre à contenir le produit à décontaminer munie de moyens de chauffage externes 73, par exemple constitués par des résistances de chauffage 74, et munie de moyens de chauffage interne 75 par circulation d'un gaz.

Les moyens de chauffage interne comportent par exemple un ventilateur de soufflage 76 branché en circuit fermé sur l'enceinte 72 et des résistances chauffantes 77 de chauffage du gaz de soufflage circulant dans une tuyauterie 78 de recyclage. Des vannes 79 et 80, d'isolation et de réglage des pertes de charge du circuit sont prévues.

Un capteur 81 de pression de l'enceinte 72 est prévu.

Des capteurs de températures 88 de l'enceinte 72, par exemple, constitués par des thermo-couples, sont également installés de façon appropriée, contre l'enceinte ou en "doigts de gant".

Ces capteurs sont raccordés à un automate 83 de contrôle et de commande du dispositif, comprenant des moyens connus en eux-mêmes, pour toujours maintenir la température de l'enceinte strictement inférieure à une valeur déterminée, et pour permettre la commande et le contrôle du débit du ventilateur 76 et de la puissance calorifique des résistances chauffantes 74 et 77 dans une plage de températures n'entraînant pas la dégradation néfaste pour l'environnement du contaminant.

Le dispositif comprend des moyens 84 d'extraction de l'atmosphère et de mise sous vide de l'enceinte 72 comportant par exemple un flexible 85 de branchement de l'enceinte sur un condenseur 86 muni de serpentins de refroidissement 87. Le flexible 85 est en pente de façon à permettre l'écoulement des condensats vers le condenseur 86. Les condensats 87 sont récupérés en fond de condenseur et évacués par une tuyauterie de vidange 89.

Un condenseur de "sécurité" 90 raccordé sur le condenseur 86, est branché en série avec une pompe à vide ou dépresseur 91, par exemple du type dépresseurs fabriqués par la Société ROOTS, qui fait le vide dans le reste du dispositif. La pompe à vide refoule vers l'atmosphère par exemple par l'intermédiaire d'un filtre 92.

Un pressotat 93 connecté à l'automate 83, permet le contrôle et la commande, par l'intermédiaire du dépresseur 91, de la valeur du vide dans le condenseur 86 et donc dans l'enceinte 72, également contrôlée par le capteur de pression 81.

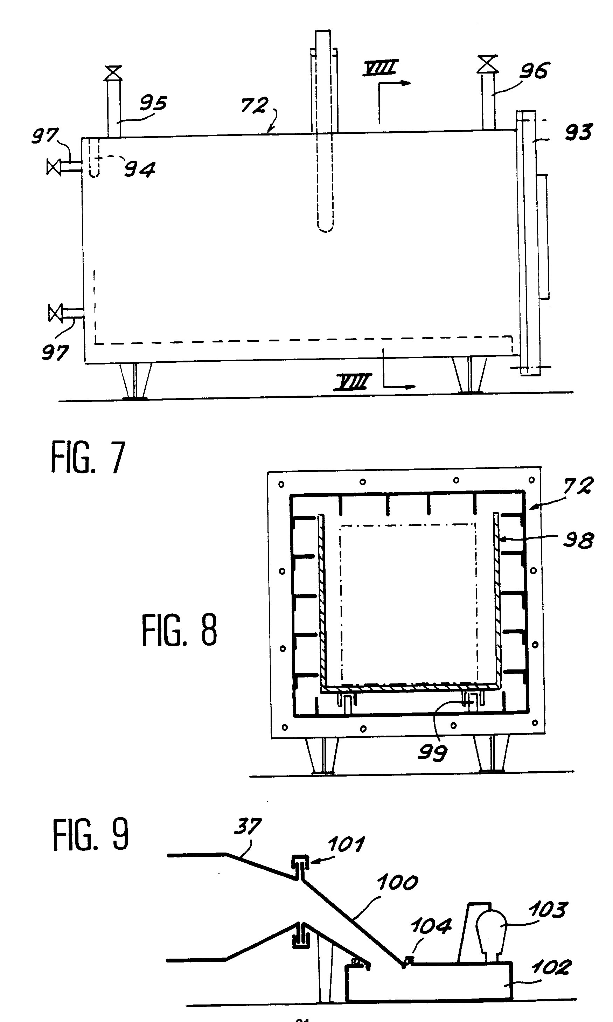

Les figures 7 et 8 montrent un exemple de réalisation d'enceinte 72 d'un dispositif de décontamination de produit solide non friable selon l'invention.

L'enceinte 72, constituée par un parallélépipède en acier calorifugé, comprend un couvercle 93, des doigts de gant 94 de mesure de température, et les différents piquages pour la circulation des gaz, 95, 96 et l'extraction des gaz, 97.

L'enceinte comprend un "panier" 98 amovible et ajouré, de stockage du produit à décontaminer. Le panier est par exemple monté sur roulettes 99.

On va maintenant décrire le fonctionnement d'un dispositif mettant en oeuvre le procédé de l'invention par exemple appliqué à la décontamination de terre polluée en PCB, en se référant à la figure 2.

Après avoir ouvert le couvercle 45 et dégagé l'accès à l'enceinte 37, on introduit la terre contaminée 38 dans l'enceinte.

On ferme ensuite le couvercle 45, puis on connecte par l'intermédiaire du joint tournant 44, le four tournant au circuit 43 d'aspiration et de condensation.

On chauffe ensuite le produit qui est malaxé dans le four tournant pour homogénéiser la température.

La pompe à vide 54 assure une légère dépression (par exemple 0,9 bar absolu) dans l'enceinte 37, pour une température située aux alentours de 90-100°C, (dépendant de la dépression) l'eau contenue dans le produit se vaporisant.

La vapeur est aspirée par le circuit 43 et se condense dans le filtre 46 qui filtre également les poussières entraînées par la vapeur.

Une fois la vapeur totalement évacuée, le filtre 46 est isolé par exemple automatiquement, et la pompe à vide 54 réalise le vide de fonctionnement (par exemple 0,1 bar) dans l'enceinte 37. L'intérieur de l'enceinte contient donc très peu d'oxygène.

Puis la température de l'enceinte est graduellement augmentée par l'automate 40 jusqu'à atteindre la température recherchée, de chauffage du produit contenu dans l'enceinte, comprise dans la plage de températures n'entraînant pas la dégradation néfaste pour l'environnement du contaminant. Cette température est controlée par capteur (non représentés) et prend en compte les résultats d'étalonnage de l'appareil.

A une certaine température, le PCB se vaporise; il est aspiré via le filtre 46 ou via le circuit de by-pass passant par la vanne 49 dans les condenseurs 48 et 52, où il se condense pour s'égoutter dans les récipients 51 et 53 dans lesquels il est stocké en attente de son conditionnement ou de sa destruction.

La durée de chauffage du produit à décontaminer dans l'enceinte sous vide dépend de la contamination initiale. On observe en règle générale qu'une durée inférieure à 24 heures est suffisante. Par exemple, pour une contamination initiale de 75.000 ppm, en chauffant à 215° C, la teneur résiduelle en PCB de la terre décontaminée est d'une valeur d'environ 1,7 ppm pour une durée de traitement de 24 heures.

La terre décontaminée qui se présente sous forme pulvérulente est ensuite extraite du four 37. Pour ce faire (voir figure 9) on peut utiliser une goulotte 100 raccordée d'un côté à l'enceinte 37 par un capotage étanche 101 et de l'autre côté à une "boîte" 102 munie d'une "manchette" filtrante 103, par un joint du type néoprène 104.

Dans le cas du fonctionnement du dispositif appliqué à la décontamination d'un produit non friable du type transformateur contaminé au PCB (voir figure 6), le chauffage est réalisé par convection, par circulation d'un gaz dans l'enceinte 72.

Le gaz utilisé peut être un gaz neutre, par exemple de l'azote.

Une fois que la température de vaporisation recherchée est atteinte, la circulation de gaz est arrêtée. Le circuit 75 est isolé par fermeture des vannes 79 et 80.

On réalise ensuite le vide en aspirant l'atmosphère de l'enceinte via la pompe à vide 91 ce qui permet la vaporisation du PCB qui est recondensé dans le condenseur 93 puis récupéré via la tuyauterie 89 pour stockage et destruction.

Dans le cas de la décontamination de feuilles d'aluminium de condensateurs, le papier intercalé entre les feuilles est "carbonisé" vers 240° C. Les calcinats sont entraînés par l'air de balayage et filtrés sur un filtre (non représenté sur les figures). L'aluminium est ainsi aisément nettoyé des résiduts de papier et peut être récupéré.

A titre d'exemple, des résultats particulièrement avantageux de décontamination réalisée avec le procédé de l'invention, on note que pour un condensateur initialement contaminé par 200.000 à 400.000 ppm de PCB, la teneur finale en PCB de l'aluminium est inférieure à 1 ppm, après traitement pendant 24 heures à 280° C sous un vide de 50 mm de Hg en pression absolue.

Pour un béton concassé contaminé, dont la teneur initiale en mercure est supérieure à 100.000 ppm, la teneur résiduelle en mercure après 12 heures de traitement à 400° C sous vide de 50 mm de Hg en pression absolue, est inférieure à 30 ppm, voir à moins de 5 ppm.

La simplicité du circuit de traitement de gaz des dispositifs de l'invention constitue un avantage non négligeable de cette dernière, en particulier quand on compare ce circuit à un circuit de traitement de gaz classique en cas d'incinération. Cette simplicité s'explique par le très faible débit de gaz extrait à traiter, débit qui est quasiment nul lorsqu'on utilise le procédé et les dispositifs selon l'invention.

Enfin, on communique ci-après trois tableaux donnant des exemples de résultat d'essais obtenus avec un procédé et un dispositif selon l'invention.

Ces tableaux illustrent, de façon nullement limitative, d'une part la diversité des produits décontaminables avec l'invention, par exemple initialement contaminés au PCB (tableau n° 1) ou en mercure (tableau n° 2 et 3), d'autre part les valeurs de contamination que l'on peut, par exemple, obtenir après mise en oeuvre du procédé de l'invention dans les conditions opératoires prévisées sur les tableaux.

Le tableau n° 1 montre notamment que l'invention est adaptée à la décontamination de produit faiblement contaminé initialement, c'est-à-dire avec une proportion inférieure à de l'ordre de 1000 ppm, ou fortement contaminé, c'est-à-dire avec une proportion supérieure à de l'ordre de 100.000 ppm.

Le tableau n° 2 concerne des terres friables très contaminées en mercure.

Le tableau n° 3 concerne la décontamination de piles alcalines. Dans ces deux derniers tableaux, les principes utilisés pour effectuer les analyses de décontamination ont, par ailleurs, été indiqués.

**TABLEAU N° 1**

Essais de décontamination par chauffage sous vide de différents contaminants sur différents supports

| N°manip | Support | T°(°C) | Pression absolue mm Hg | Durée de chauffe(h) | Contamination initiale (ppm PCB) | Contamination finale (PPM) |
|---------|---------|--------|-----------------|-----------------|----------------------------|----------------------------|
| 1 | Parpaing (diam.5cm) | 300 | 60 | 25 h | ≃ 66 000 | 3,5 |
| 2 | Terre rouge humide · | - | 50 | 24 h | 21 754 | 2,2 |
| ∩ | Bois de transfo | 260/280 | 50/55 | 18 h | 400.000 | 23,2 |
| 4 | charbon actif | 300 | 50/55 | 16 h | {PCB:335 {TCB:2800 | {1,3 {2,6 |
| 5 | gravier diam.1cm | 260°C(36h) 290°C(5H° | 50/60 | 41 h | 55 800 | 0,3 |
| 6 | charbon actif | 250 140 105 | | | | |
| 7 | Bloc béton | 240 | 50 | 23 h | saturé en PCB | 1,8 |
| 8 | caillous | 310 | 50 | 31 h | 63 570 (huile diélectrique) | |
| 9 | cuivre | 305 | 60 | 36 h | saturé | 0,23 0 |
| 10 | sable | 215 | 60 | 24 h | 73 500 | 1,7 |
| 11 | condensateur | 285 | 35 | 67 h | ≃450 000 (PCB 1242) | 9à11,5 |
| 12 | sable | 300 | 35 | 16h30+ | 73 500 | 0,3 |
| 13 | feuille papier | 285 | 40 | 22 h+ | · | · |
| 14 | sable | 210 | 50 | 26 h+ | 73 500 | 43 |
| 15 | sable | 207 | 60/40 | 65 h+ | 73 500 | ≃ 2,05 |

TABLEAU N° 3

Essai de décontamination de piles alcalines

| Repère échantillon | Type de pile | Contamination initiale(ppm) | | Pression (mmHgabs) | T(°C) | Durée (h) | Contamination finale (ppm) | |
|---|---|---|---|---|---|---|---|---|
| | | (4) Hg | (5) | | | | (4) Hg | (5) |
| 1 | ronde 1,5 V usagée | 2050 à 2620 | | 40 mmHg | 390°C | 24 h | 29 à 37 ppm | 13,6 |
| 2 | rectangulaire 9 V usagée | 680 à 710 | | 40 mmHg | 390°C | 24 h | 11 ppm | 15 |
| 3 | ronde 1,5 V usagée | | .605 | 40 mmHg | 490°C | 24 h | 14 à 17 ppm | 18,8 |
| 4 | rectangulaire 4,5 V usagée | 1969 à 2094 | | 50 mmHg | 390°C | 24 h | 30 à 66 ppm | |

Méthode d'analyse

(4) Activation neutronique

(5) Absorption atomique

TABLEAU N° 2

| REPERE ECHANTILLON | PRESSION SERVICE mm Hg | TEMP. SERVICE °C | DUREE CHAUFFE | CONTAMINATION INITIALE ppm Hg | CONTAMINATION FINALE (Matériau) ppm Hg | CONTAMINATION EAU CONDENSEUR ppm | OBSERVATIONS |
|---|---|---|---|---|---|---|---|
| A | 50 à 60 | 300 | 3 h | 135.000 à 400.000 (2) | 331 (1) | 1,6(1) | **METHODES D'ANALYSE :**<br><br>(1)<br>  – Attaque du matériau par $HNO_3$ concentré chaud<br>  – Chauffage jusqu'à évaporation totale<br>  – Remise en solution avec $HNO_3$ moyennemant concentré<br>  – Analyse par torche plasma<br><br>(2)<br>  – Attaque du matériau par $HNO_3$ concentré chaud<br>  – Arrêt attaque des apparitions vapeurs rousses($NO_2$)<br>  – Analyse par absorption atomique<br><br>(3)<br>  – Analyse par activation neutronique |
| B | 60 | 240/255 | 4 h | 135.000 à 400.000 (2) | Non analysé traces Hg apparentes | | |
| C | 50 | 240/255 | 26 h | 135.000 à 400.000 (2) | 40 (2)<br>1 (1) | | |
| D | 50 | 320/332 | 21 h | 135.000 à 400.000 (2) | 27 (2)<br>0,01 (1) | | |
| E | 40 | 225/235 | 16 h | 40.000 + enrichisse-ment par Hg liq | 68 (1) | | |
| F | 50 | 295/325 | 20 h | 100.000 fines plus petits cailloux | 2 (1)<br>27 et 30 (3)<br>13 (2) | | |
| G | 10 à 15 | 350/390 | 30 h | 100.000 | 25 (2)<br>60 (3) | | |

EP 0 423 039 B1

**Revendications**

1. Procédé discontinu de décontamination d'un produit solide pollué par au moins un contaminant vaporisable par chauffage sous vide, dans lequel
   - on introduit le produit dans une enceinte (3,37,72) de chauffage et de mise sous vide,
   - on chauffe sensiblement dans la masse ledit produit dans une plage de températures déterminées, en réalisant dans ladite enceinte un vide inférieur à de l'ordre de 0,5 bar absolu et suffisant pour abaisser la pression de l'enceinte au-dessous du seuil de vaporisation du contaminant dans ladite plage de températures,
   - on mantient lesdites conditions de température et de dépression dans l'enceinte pendant un temps suffisant pour vaporiser sensiblement la totalité du contaminant contenu dans ledit produit,
   - on extrait le contaminant vaporisé par aspiration de l'atmosphère de l'enceinte et,
   - on condense ledit contaminant aspiré.

2. Procédé de décontamination selon la revendication 1, caractérisé en ce que le vide réalisé est compris entre 0,5 bar absolu et 0,01 bar absolu, et avantageusement de l'ordre de 0,1 bar absolu.

3. Procédé selon la revendication 1, caractérisé en ce que le vide réalisé est inférieur à de l'ordre de 0,1 bar absolu.

4. Procédé de décontamination selon l'une quelconque des revendications 1, 2 et 3, caractérisé en ce que le produit solide étant friable ou en fragments, on chauffe ledit produit par malaxage dans un four rotatif (3,37).

5. Procédé de décontamination selon l'une quelconque des revendications 1 à 4, caractérisé en ce qu'on extrait la vapeur d'eau initialement contenue dans le produit et formée lors du chauffage dudit produit au travers d'un premier circuit, en faisant recondenser ladite vapeur d'eau dans un condenseur/dépoussieur (46,56) jusqu'à élimination de ladite vapeur d'eau, puis on réalise le vide de l'enceinte et on extrait le contaminant vaporisé en aspirant l'atmosphère déshydratée de ladite enceinte au travers d'un second circuit, isolé dudit premier circuit.

6. Procédé de décontamination selon l'une quelconque des revendications 4 et 5, caractérisé en ce qu'on réalise le vide de fonctionnement dans l'enceinte avant de chauffer le produit dans ladite plage de températures.

7. Procédé de décontamination selon l'une quelconque des revendications 1 à 3, caractérisé en ce que le produit solide étant non friable, on chauffe le produit par circulation dans l'enceinte d'un gaz de chauffage.

8. Procédé de décontamination selon la revendication 7, caractérisé en ce que le gaz de chauffage est un gaz neutre.

9. Procédé de décontamination selon l'une quelconque des revendications précédentes, caractérisé en ce que le produit étant pollué par un contaminant dont la dégradation thermique est dangereuse pour l'environnement, la plage de températures est réglée de façon à éviter toute surchauffe de l'enceinte à une température supérieure ou égale au seuil de dégradation thermique possible dudit contaminant.

10. Procédé de décontamination selon la revendication 9, caractérisé en ce que le contaminant vaporisable étant du PCB, on chauffe le produit dans une plage de températures comprise entre de l'ordre de 200°C et de l'ordre de 490°C, et avantageusement entre 270°C et 330°C, en maintenant l'enceinte et le produit contaminé à des températures toujours strictement inférieures à 500°C.

11. Procédé de décontamination selon l'une quelconque des revendications 1 à 8, caractérisé en ce que la plage de températures est réglée de façon à limiter la température du contaminant vaporisé en-dessous d'une valeur seuil.

12. Procédé de décontamination selon la revendication 11, caractérisé en ce que le contaminant vaporisable étant du mercure, on chauffe le produit dans une plage de températures comprise entre de l'ordre de 200°C et de l'ordre de 800°C, et avantageusement à de l'ordre de 500°C.

13. Procédé de décontamination selon l'une quelconque des revendications précédentes, caractérisé en ce qu'on maintient lesdites conditions de température et de dépression pendant une durée comprise entre de l'ordre de 5 heures et de l'ordre de 36 heures et avantageusement de l'ordre de 8 heures.

14. Procédé de décontamination selon l'une quelconque des revendications précédentes, caractérisé en ce qu'on réalise de plus au moins un balayage de l'intérieur de l'enceinte par un gaz neutre, avantageusement de l'azote, pendant un temps déterminé, lors de l'extraction du contaminant vaporisé, pour entraîner les traces résiduelles de contaminant vaporisé, stagnant éventuellement dans ladite enceinte.

15. Dispositif de décontamination d'un produit solide pollué par au moins un contaminant vaporisable par chauffage sous vide, caractérisé en ce qu'il comprend :
    - une enceinte (3,37,72)
    - des moyens (12,39,75) de chauffage de l'enceinte et de son contenu dans une plage de température déterminée,
    - des moyens (18,20,40,82,83) de contrôle de la température de ladite enceinte agencés pour toujours maintenir ladite température strictement inférieure à une valeur déterminée et préréglée,
    - des moyens (32,54,91) d'extraction de l'atmosphère, et de mise sous vide inférieure à de l'ordre de 0,5 bar absolu, de ladite enceinte, propre à vaporiser ledit contaminant dans ladite plage de températures et,
    - des moyens (24,48,52,56,86,90,91) de condensation du contaminant vaporisé et aspiré.

16. Dispositif de décontamination selon la revendication 15, caractérisé en ce que l'enceinte est une enceinte de chauffage (3,37,72), et en ce qu'il comporte des moyens de contrôle de la température de l'atmosphère extraite de ladite enceinte (18,20,40,83) agencés pour toujours maintenir ladite température strictement inférieure à une valeur déterminée et préréglée.

17. Dispositif selon l'une quelconque des revendications 15 et 16, caractérisé en ce que le produit solide contaminé étant friable ou préalablement concassé, l'enceinte de chauffage est constituée par un four rotatif (3,37), les moyens de chauffage de l'enceinte et de son contenu (12,39) étant externes à ladite enceinte.

18. Dispositif selon la revendication 17, caractérisé en ce que les moyens d'extraction de l'atmosphère et de mise sous vide de l'enceinte, comprennent des moyens (56) de condensation et de filtration par barbotage de la vapeur d'eau formée lors du chauffage du produit, isolables des moyens (48,52) de condensation du contaminant vaporisé.

19. Dispositif selon l'une quelconque des revendications 15 et 16, caractérisé en ce que le produit solide étant non friable, les moyens de chauffage du contenu de l'enceinte comprennent des moyens (75) de circulation d'un gaz de chauffage dans ladite enceinte.

20. Dispositif selon l'une quelconque des revendications 15 à 19, caractérisé en ce qu'il comporte le plus des moyens de balayage par un gaz neutre de l'intérieur de l'enceinte.

**Patentansprüche**

1. Diskontinuierliches Verfahren der Dekontamination eines festen Produkts, das durch mindestens einen kontaminierenden Stoff verunreinigt ist, der durch Heizen unter Vakuum verdampfbar ist, wobei
    - man das Produkt in einen Heiz- und Unterdruckraum (3, 37, 72) einbringt,
    - man das Produkt im wesentlichen in der Masse auf einen Bereich bestimmter Temperaturen aufheizt, indem man in dem Raum ein Vakuum von weniger als etwa 0,5 bar absolut und ausreichend, um den Druck in dem Raum unter die Verdampfungsschwelle des Kontaminationsstoffs in dem Temperaturbereich zu senken, realisiert,
    - man die genannten Bedingungen der Temperatur und des Unterdrucks in dem Raum während einer Zeit aufrecht erhält, die ausreicht, um im wesentlichen die Gesamtheit des in dem Produkt enthaltenen Kontaminationsstoffs zu verdampfen,
    - man den verdampften Kontaminationsstoff durch Absauben der Atmosphäre des Raums extrahiert und
- man den abgesaugten Kontaminationsstoff kondensiert.

2. Verfahren zur Dekontamination nach Anspruch 1, dadurch gekennzeichnet, daß das realisierte Vakuum zwischen 0,5 bar absolut und 0,01 bar absolut enthalten ist, vorteilhafterweise in der Größenordnung von 0,1 bar absolut.

3. Verfahren nach Anspruch 1, dadurch gekennzeichnet, daß das realisierte Vakuum niedriger als etwa 0,1 bar absolut ist.

4. Verfahren zur Dekontamination nach einem der Ansprüche 1, 2 und 3, dadurch gekennzeichnet, daß man, wenn das feste Produkt bröckelig oder in Fragmenten ist, es durch Durchmischen in einem Drehofen (3,37) erhitzt.

5. Verfahren zur Dekontamination nach einem der Ansprüche 1 bis 4, dadurch gekennzeichnet, daß man den ursprünglich in dem Produkt enthaltenen und während des Heizens des Produkts gebildeten Wasserdampf durch eine erste Leitung extrahiert, indem man diesen Wasserdampf in einem Kondensator/Entstauber (46, 56) bis zur Eliminierung des Wasserdampfs rekondensieren läßt, man anschließend das Vakuum in dem Raum realisiert und man den verdampften Kontaminationsstoff durch Absaugen der entwässerten Atmosphäre des Raums durch eine zweite von der ersten Leitung isolierte Leitung extrahiert.

6. Verfahren zur Dekontamination nach einem der Ansprüche 4 und 5, dadurch gekennzeichnet, daß man das Funktionsvakuum in dem Raum vor dem Heizen des Produkts in dem Temperaturbereich realisiert.

7. Verfahren zum Dekontaminieren nach einem der Ansprüche 1 bis 3, dadurch gekennzeichnet, daß man, wenn das feste Produkt nicht bröckelig ist, es durch Zirkulation eines Heizgases in dem Raum erhitzt.

8. Verfahren zur Dekontamination nach Anspruch 7, dadurch gekennzeichnet, daß das Heizgas ein neutrales Gas ist.

9. Verfahren zur Dekontamination nach einem der vorhergehenden Ansprüche, dadurch gekennzeichnet, daß, wenn das Produkt durch einen Kontaminationsstoff verunreinigt ist, dessen termische Zersetzung gefährlich für die Umwelt ist, der Temperaturbereich derart geregelt wird, daß jede Überheizung des Raums auf eine Temperatur vermieden wird, die größer oder gleich einer Schwelle der möglichen termischen Zersetzung des genannten Kontaminationsstoffes ist.

10. Verfahren zur Dekontamination nach Anspruch 9, dadurch gekennzeichnet, daß, wenn der verdampfbare Kontaminationsstoff PCB ist, man das Produkt in einem Temperaturbereich zwischen etwa 200 °C und etwa 490 °C erhitzt, vorteilhafterweise zwischen 270 °C und 330 °C, indem man den Raum und das kontaminierte Produkt auf Temperaturen hält, die immer strikt niedriger als 500 °C liegen.

11. Verfahren zur Dekontamination nach einem der Ansprüche 1 bis 8, dadurch gekennzeichnet, daß der Temperaturbereich derart geregelt wird, daß die Temperatur des verdampften Kontaminationsstoffs unterhalb eines Schwellenwerts begrenzt wird.

12. Verfahren zur Dekontamination nach Anspruch 11, dadurch gekennzeichnet, daß, wenn der verdampfbare Kontaminationsstoff Quecksilber ist, man das Produkt in einem Temperaturbereich zwischen etwa 200 °C und etwa 800 °C erhitzt, vorteilhafterweise etwa 500 °C.

13. Verfahren der Dekontamination nach einem der vorhergehenden Ansprüche, dadurch gekennzeichnet, daß man die genannten Bedingungen der Temperatur und des Unterdrucks während einer Dauer zwischen etwa 5 Stunden und etwa 36 Stunden und vorteilhafterweise etwa 8 Stunden aufrechterhält.

14. Verfahren zur Dekontamination nach einem der vorhergehenden Ansprüche, dadurch gekennzeichnet, daß man weiterhin mindestens ein Spülen des Inneren des Raums durch ein neutrales Gas, vorteilhafterweise Stickstoff, während einer bestimmten Zeit bei der Extraktion des verdampften Kontaminationsstoffs realisiert, um die Restspuren des verdampften Kontaminationsstoffs, die ggf. in dem Raum stillstehen, mitzunehmen.

15. Vorrichtung zur Dekontamination eines festen Produkts, das von mindestens einem Kontaminationsstoff verunreinigt ist, der durch Heizen unter Vakuum verdampfbar ist, dadurch gekennzeichnet, daß sie umfaßt:
- einen Raum (3, 37, 72)
- Mittel (12, 39, 75) zum Heizen des Raums und seines Inhalts in einem bestimmten Temperaturbereich,
- Mittel (18, 20, 40, 82, 83) zur Kontrolle der Temperatur des Raums, die derart ausgebildet sind, daß sie die genannte Temperatur immer strikt tiefer als einen vorbestimmten und vorgeregelten Wert halten,
- Mittel (32, 54, 91) zum Extrahieren der Atmosphäre aus dem Raum und um diesen auf einen Unterdruck der Größe von 0,5 bar absolut zu setzen, der geeignet ist, den genannten kontaminierenden Stoff in dem genannten Temperaturbereich zu verdampfen, und
- Mittel (24, 48, 52, 56, 86, 90, 91) zur Kondensation des verdampften und abgesaugten Kontaminationsstoffs.

16. Vorrichtung zur Dekontamination nach Anspruch 15, dadurch gekennzeichnet, daß der Raum ein Heizraum (3, 37, 72) ist und daß er Mittel zur Kontrolle der Temperatur der aus dem Raum (18, 20, 40, 83) extrahierten Atmosphäre aufweist, die derart ausgebildet sind, daß sie ständig diese Temperatur strikt tiefer als ein vorbestimmter und vorgeregelter Wert halten.

17. Vorrichtung nach einem der Ansprüche 15 und 16, dadurch gekennzeichnet, daß, wenn das kontaminierte feste Produkt bröckelig oder vorher zerkleinert ist, der Heizraum von einem Drehofen (3, 37) gebildet ist, wobei die Heizmittel für den Raum und seinen Inhalt (12, 39) extern zu dem Raum sind.

18. Vorrichtung nach Anspruch 17, dadurch gekennzeichnet, daß die Extraktionsmittel der Atmosphäre und der Unterdruckbildung in dem Raum Mittel (56) zur Kondensation und Filtration des bei der Erhitzung des Produkts gebildeten Wasserdampfs durch Gasdurchblasung enthalten, die von den Mitteln (48, 52) der Kondensation des verdampften Kontaminationsstoffs isolierbar sind.

19. Vorrichtung nach einem der Ansprüche 15 und 16, dadurch gekennzeichnet, daß, wenn das feste Produkt nicht bröckelig ist, die Mittel zum Erhitzen des Inhalts des Raums Zirkulationsmittel (75) für ein Heizgas in dem Raum umfassen.

20. Vorrichtung nach einem der Ansprüche 15 bis 19, dadurch gekennzeichnet, daß sie darüber hinaus Mittel zum Spülen des Inneren des Raums mit Hilfe eines neutralen Gases aufweist.

## Claims

1. Noncontinuous process for the decontamination of a solid product polluted by at least one contaminant which can be vaporized by heating under vacuum, in which
- the product is introduced into a heating and evacuating enclosure (3, 37, 72),
- the said product is heated, substantially in bulk, within a given temperature range, a vacuum being created in the said enclosure which is below about 0.5 bar absolute and sufficient to reduce the pressure of the enclosure below the vaporization threshold of the contaminant within the said temperature range,
- the said temperature and reduced pressure conditions in the enclosure are maintained for a sufficient time to vaporize substantially all the contaminant contained in the said product,
- the vaporized contaminant is extracted by sucking the atmosphere out of the enclosure, and
- the said contaminant which has been sucked out is condensed.

2. Decontamination process according to Claim 1, characterized in that the vacuum created is between 0.5 bar absolute and 0.01 bar absolute, and advantageously about 0.1 bar absolute.

3. Process according to Claim 1, characterized in that the vacuum created is less than about 0.1 bar absolute.

4. Decontamination process according to any one of Claims 1, 2 and 3, characterized in that, the solid product being friable or in fragments, the said product is heated by being mixed in a rotary furnace (3, 37).

5. Decontamination process according to any one of Claims 1 to 4, characterized in that the water vapour initially contained in the product and formed when the said product is heated is extracted through a first circuit, the said water vapour being recondensed in a condenser/dust separator (46, 56) until it has been removed, then a vacuum is created in said enclosure and the vaporized contaminant is extracted by sucking the dehydrated atmosphere out of the said enclosure through a second circuit, which is isolated from the said first circuit.

6. Decontamination process according to either of Claims 4 and 5, characterized in that the operating vacuum is created in the enclosure before the product is heated within the said temperature range.

7. Decontamination process according to any one of Claims 1 to 3, characterized in that, the solid product being non-friable, the product is heated by the circulation of a heating gas in the enclosure.

8. Decontamination process according to Claim 7, characterized in that the heating gas is an inert gas.

9. Decontamination process according to any one of the preceding claims, characterized in that, the product being polluted by a contaminant whose thermal degradation is hazardous to the environment, the temperature range is adjusted so as to avoid any overheating of the enclosure to a temperature greater than or equal to the possible thermal degradation threshold of the said contaminant.

10. Decontamination process according to Claim 9, characterized in that if the vaporizable contaminant is PCB, the product is heated within a temperature range from about 200°C to about 490°C, and advantageously from 270°C to 330°C, the enclosure and the contaminated product being kept at temperatures which are always strictly below 500°C.

11. Decontamination process according to any one of Claims 1 to 8, characterized in that the temperature range is adjusted so as to limit the temperature of the vaporized contaminant below a threshold value.

12. Decontamination process according to Claim 11, characterized in that if the vaporizable contaminant is mercury, the product is heated within a temperature range from about 200°C to about 800°C, and advantageously at about 500°C.

13. Decontamination process according to any one of the preceding claims, characterized in that said temperature and reduced pressure conditions are maintained for a period of between about 5 hours and about 36 hours, and advantageously of about 8 hours.

14. Decontamination process according to any one of the preceding claims, characterized in that, in addition, the interior of the enclosure is swept at least once with an inert gas, advantageously nitrogen, for a given time, when the vaporized contaminant is extracted, in order to entrain any residual traces of vaporized contaminant stagnating in the said enclosure.

15. Device for the decontamination of a solid product polluted by at least one contaminant which can be vaporized by heating under vacuum, characterized in that it comprises:
    - an enclosure (3, 37, 72),
    - means (12, 39, 75) of heating the enclosure and its contents within a given temperature range,
    - means (18, 20, 40, 82, 83) of controlling the temperature of the said enclosure, which are adjusted so as always to keep the said temperature strictly below a given preset value,
    - means (32, 54, 91) of extracting the atmosphere from the said enclosure and of placing it under a vacuum below about 0.5 bar absolute, which is capable of vaporizing the said contaminant within the said temperature range, and
    - means (24, 48, 52, 56, 86, 90, 91) of condensing the vaporized contaminant which has been sucked out.

16. Decontamination device according to Claim 15, characterized in that the enclosure is a heating enclosure (3, 37, 72), and in that it comprises means of controlling the temperature of the atmosphere extracted from the said enclosure (18, 20, 40, 83), which are adjusted so as always to keep the said temperature strictly below a given preset value.

17. Device according to either of Claims 15 and 16, characterized in that, the contaminated solid product being friable or crushed beforehand, the heating enclosure consists of a rotary furnace (3, 37), the means of heating the enclosure and its contents (12, 39) being outside said enclosure.

18. Device according to Claim 17, characterized in that the means of extracting the atmosphere from the enclosure and of placing it under a vacuum comprise means (56) of condensing the water vapour formed during the heating of the product, and of filtering it by bubbling, which can be isolated from the means (48, 52) of condensing the vaporized contaminant.

19. Device according to either of Claims 15 and 16, characterized in that, the solid product being non-friable, the means of heating the contents of the enclosure comprise means (75) of circulating a heating gas in the said enclosure.

20. Device according to any one of Claims 15 to 19, characterized in that it additionally has means of sweeping the interior of the enclosure with an inert gas.

FIG. 1

EP 0 423 039 B1

FIG. 2

FIG. 3

FIG. 4

FIG. 5

19

FIG. 6

EP 0 423 039 B1

FIG. 7

FIG. 8

FIG. 9

21